# EUROPEAN PATENT APPLICATION

(11) **EP 2 227 067 A1**
(43) Date of publication of application: **08.09.2010**
(21) Application number: 08873723.4
(22) Date of filing: 25.11.2008
(51) Int. Cl.: H04W 88/18

(54) **METHOD, DEVICE AND SYSTEM FOR PROCESSING TONE IN MEDIA STREAM**

(30) Priority: 01.04.2008 CN 200810066437
(71) Applicant: Huawei Technologies Co., Ltd., Longgang District, Shenzhen Guangdong 518129 (CN)
(72) Inventor: LIN, Yangbo, Shenzhen Guangdong 518129 (CN)
(74) Representative: Thun, Clemens
(86) International application number: PCT/CN2008/073194
(87) International publication number: WO 2009/121235

(57) **Abstract**

A method, apparatus and system for processing a tone in a media stream are disclosed in the present inventions. The method includes: receiving, by a media gateway (MG), a command issued by a media gateway controller (MGC) which carries a property parameter for controlling removal of the tone in the media stream; and removing or reserving, by the MG, the tone in the media stream according to the property parameter.

## Description

The present application claims priority to Chinese patent application 200810066437.X submitted to the Chinese Patent Office on April 1, 2008, and titled as "Method, Apparatus and System for Processing Tone in Media Stream", which is incorporated herein by reference in its entirety.

### Field of the Invention

The present invention relates to the field of communication technologies, and particularly to a method, apparatus and system for processing tone in media stream.

### Background

Media Gateway Controller (MGC) and Media Gateway (MG) are two key components of a packet network in an architecture having the service and the bearer separated from each other. The MGC takes charge of a service control function, and the MG takes charge of a media bearer function, so as to separate the service control plane from the media bearer plane, and therefore to sufficiently share network resources, simplify equipment updating and service extension, and reduce cost of development and maintenance.

Under the control of the MGC, the MG can establish a media stream transmission with other equipment, such as a user agent (UA) representing the user. In some service scenes, tones associated with call progress and communicated between the MG and the UA, such as busy tone, ringing tone, fax calling tone (CNG) and fax called end identification (CED) answering tone, will be transmitted through a media stream. The MG has to extract these tones from the received media stream, and to remove these tones from the media stream if they are no longer necessary for the subsequent transmission or processing of the media stream, otherwise problems like waste of processing capability and misjudgment of call progress will occur.

In implementing the present invention, the inventors recognized that the existing technology has at least the following problem in the current MGC-MG separated architecture, that is, there is no effective mechanism for enabling the MGC to control the MG to remove the tones from the media stream.

### Summary of the Invention

The embodiments of the present invention provide a method, apparatus and system for processing tone in media stream, which enable the MG to process the tone in the media stream.

An embodiment of the present invention provides a method for processing a tone in a media stream, including:
receiving, by a media gateway (MG), a command issued by a media gateway comptroller (MGC) which carries a property parameter for controlling removal of tones from the media stream; and
removing or reserving, by the MG, the tone in the media stream according to the property parameter.

Another embodiment of the invention further provides a media gateway, including:
a property setting unit, configured to set a property parameter for controlling removal of a tone from a media stream according to a command from a media gateway controller; and
a processing unit, configured to process the tone in the media stream according to the property parameter set by the property setting unit.

Another embodiment of the invention further provides a system for processing a tone in a media stream, including a media gateway controller (MGC) and a media gateway (MG), wherein
the MGC is configured to send a command to the MG to instruct the MG to set a property parameter for controlling the removal of the tone from media stream; and
the MG is configured to set the property parameter according to the command from the MGC, and remove or reserve the tone in the media stream according to the property parameter.

In the embodiments of the invention, a Tone Removal property is set for the MG by the MGC, so that the MG can process the tone in the media stream, and remove the tones if necessary, therefore the problems such as waste of processing capability and misjudgment of call progress can be avoided.

### Brief Description of the Drawings

Fig. 1 schematically illustrates networking of MG and MGC according to an embodiment of the present invention;
Fig. 2 is a flowchart of Embodiment 1 of the present invention;
Fig. 3 is a flowchart of Embodiment 2 of the present invention;
Fig. 4 is a flowchart of Embodiment 3 of the present invention;
Fig. 5 is a flowchart of Embodiment 4 of the present invention;
Fig. 6 is a schematic structural diagram of a system according to Embodiment 5 of the present invention.

### Detailed Description of the Embodiments

In order to clarify the technical solutions of the invention, the invention will be further described in detail with reference to the drawings and the embodiments.

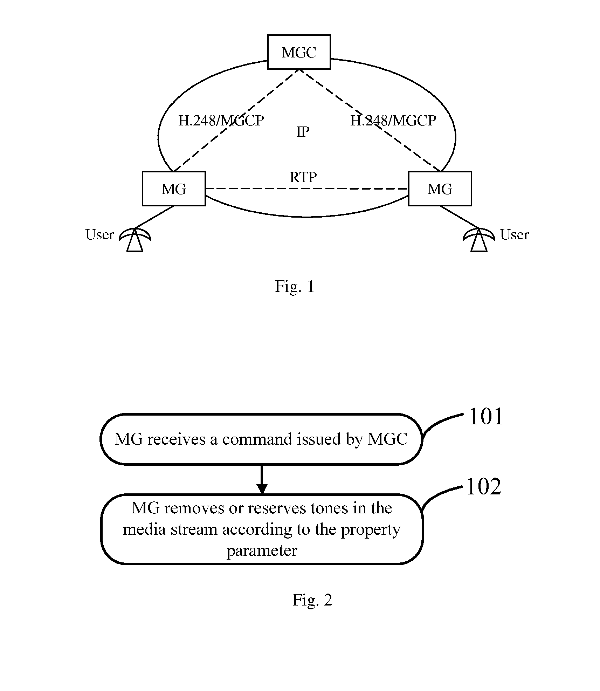

Fig. 1 schematically illustrates networking of a media gateway (MG) and a media gateway controller (MGC) according to an embodiment of the present invention.

(Media) gateway control protocols are principal protocols for communication between the MG and the MGC, in which the H.248/MeGaCo and the Media Gateway Control Protocol (MGCP) are widely adopted.

Taking H.248 as an example, resources on the MG are abstracted as Terminations, which includes Physical Termination and Ephemeral Termination. The Physical Termination represents physical entities having semi-permanent existence such as TDM time slot, the Ephemeral Termination represents public resources released after ephemeral use, such as RTP stream. In addition, a special Termination called Root Termination represents the MG entirety. The association between Terminations is abstracted as Context, which may include multiple Terminations, and therefore an interrelation between Terminations may be described with a Topology. A Termination having no association with other Terminations is included in a special Context called Null Context.

According to the above abstract connection model, the interaction between the service and the bearer is actually an operation on the Termination and the Context. Such operation is performed through Request and Reply of a Command between the MGC and the MG. Types of the command include Add, Modify, Subtract, Move, AuditValue, AuditCapabilities, Notify and ServiceChange. The command parameter is also called Descriptor, and is classified into Property, Signal, Event, Statistic, etc. For convenience, parameters associated with service are logically aggregated into a Package.

The control over the MG exercised by the MGC may be pertinent to the Termination or the stream on the Termination. Characteristics not exclusively possessed by stream on the Termination are described with TerminationState descriptors, such as ServiceState and EventBufferControl. Characteristics exclusively possessed by stream on the Termination are described with Media descriptors, which include a series of Stream descriptors. Each Stream descriptor includes a LocalControl descriptor, a Local descriptor and a Remote descriptor with respect to a single stream. The LocalControl descriptor includes stream-related control information such as Mode, ReserveGroup, ReserveValue, etc. The Local and Remote descriptors respectively include characteristics of the streams received by the local and the remote ends, such as address, port and CODEC, in a form of the Session Description Protocol (SDP).

Therefore, in order to enable the MGC to control the MG to remove the tones from the media stream, the (media) gateway control protocols shall be extended. The present invention will be described in detail as follows with reference to several embodiments.

### Embodiment 1

Referring to Fig. 2, illustrated is a flowchart of this embodiment, which includes the following steps:
Step 101: An MG receives a command issued by an MGC which carries property parameter for controlling removal of tones from a media stream; and
Step 102: The MG removes or reserves the tones in the media stream according to the property parameter.

### Embodiment 2

In this embodiment, a Property is employed to indicate whether or not the tones shall be removed from the media stream. The Property may be defined in the current Package or a new Package, and in a format of "Package ID/Property ID". For example, the new Package may be named as "Media Stream Tone Removal (mstr) Package", and the Property may be named as "Tone Removal (tr)", to be used in a format of "mstr/tr".

The Property is of a Boolean type, where value "ON" indicates to remove tones from the media stream, and value "OFF" indicates not to removes tones from the media stream. In addition, the default value (i.e. when the Property is not set) is "OFF". The Property is set for a certain stream to control whether or not to remove tones from the stream, and therefore it is used in the LocalControl descriptor set for a certain stream and includes the control information of the stream.

When the MGC needs to remove tones from a certain media stream on the MG, the MGC sets the above tr property for the MG, and sets the value as ON. The MGC may transmit the property setting through a command such as Add, Move, Modify, etc., where the property setting is carried in the LocalControl descriptor for the media stream. After receiving the property setting from the MGC, the MG removes detected tones from the media stream before transferring the media stream to the next transmission (e.g. another Termination) or processing (e.g. code conversion) section. The detection referred to herein may be one of the following actions: the MG detects all tones detectable in its capability, and the MG detects all tones instructed by the MGC. If the MGC sets the value of the tr Property as OFF, the MG will not perform any operation about the removal of tones from the media stream. If the MGC does not set the tr Property, the MG will proceed by taking the default value OFF.

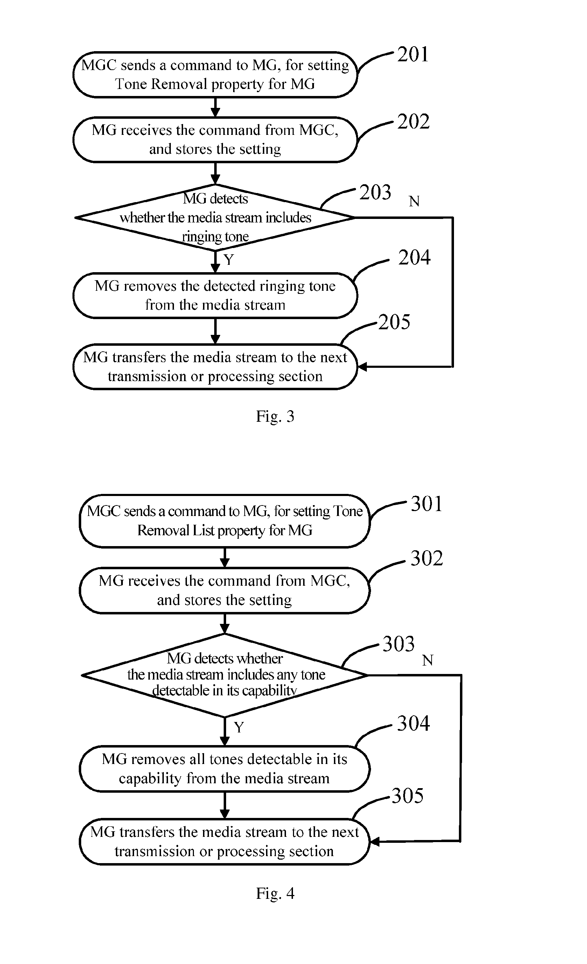

Referring to Fig. 3, illustrated is a flowchart of this embodiment, which includes the following steps:
Step 201: An MGC sends a command for an MG, for setting a Tone Removal property for the MG with respect to a specific media stream on the MG.

The MGC may send the command, such as Add, Move, Modify, etc. to the MG. The command carries the Tone Removal property in the LocalControl descriptor for the media stream. In this embodiment, the value of the Tone Removal property is set as ON, and it may be pre-defined that the MG shall remove all tones instructed by the MGC. It is assumed that the MGC instructs the MG to detect the ringing tone, the ring tone in the media stream shall be removed.

After the setting is completed, the MGC may, if necessary, send a command to the MG for modifying the value of the property.

Step 202: The MG receives the command from the MGC, and stores the setting.

Step 203: The MG detects whether the media stream includes ringing tone, and if yes, the process proceeds to step 204; otherwise, the process proceeds to step 205 directly.

Step 204: The MG removes the detected ringing tone from the media stream.

Step 205: The MG forwards the media stream to the next transmission or processing section.

### Embodiment 3

In this embodiment, a property is employed to indicate a list of tones to be removed from the media stream. This property may be defined in the current Package or a new Package, and used in a format of "Package ID/property ID". For example, the new Package may be named as "Media Stream Tone Removal (mstr)", and the property may be named as "Tone Removal list (tr1)", to be used in a format of "mstr/tr1".

The property is of a String type, and the value is a list of tones to be removed from the media stream. When the value is NULL, it means that no tone is to be removed from the media stream; when the value is a wildcard "*" representing ALL, it means that all tones shall be removed from the media stream. The default (i.e. when the property is not set) value is NULL. The property is set for a specific stream to indicate tones to be removed from this stream, and therefore it is used in a LocalControl descriptor that is set for a specific stream and includes control information for this stream.

When the MGC needs to remove tones from a certain media stream on the MG, the MGC sets the above tr1 property for the MG, and includes the tones to be removed from the media stream in the value of the tr1 property. The MGC may transfer the property setting through a command such as Add, Move, Modify, etc., by carrying the property setting in a LocalControl descriptor for the media stream. After receiving the property setting from the MGC, the MG may remove the tones detected and included in the property value from the media stream before transferring the media stream to the next transmission (e.g. another Termination) or processing (e.g. code conversion) section. If the MGC sets the value of the tr1 Property as NULL, the MG will not perform any operation related with removal of tones from the media stream, and if the MGC sets the value of the tr1 Property as wildcard "*" representing ALL, the MG will remove all detected tones from the media stream. The detection herein may be defined as one of the following actions: the MG detects all tones detectable in its capability, and the MG detects all tones instructed by the MGC. If the MGC does not set the tr1 Property, the MG will proceed by taking the default value NULL.

Referring to Fig. 4, illustrated is a flowchart of this embodiment, which includes the following steps:
Step 301: The MGC sends a command to the MG, for setting a Tone Removal List property for the MG with respect to a specific media stream on the MG.

The MGC may send the command, such as Add, Move, Modify, etc., which carries the Tone Removal List property in a LocalControl descriptor for the media stream to the MG. In the present embodiment, the Tone Removal List property is valued as wildcard "*", and it may be pre-defined that the MG shall remove all tones detectable in its capability, i.e. all tones detectable shall be removed from the media stream.

After the setting is completed, the MGC may, if necessary, send a command to the MG for modifying the value of the property.

Step 302: The MG receives the command from the MGC, and stores the setting.

Step 303: The MG detects whether the media stream includes any tone detectable in its capability, and if yes, the process proceeds to step 304; otherwise, the process proceeds to step 305 directly.

Step 304: The MG removes all tones detectable in its capability from the media stream. Step 305: The MG transfers the media stream to the next transmission or processing section.

### Embodiment 4

In this embodiment, the properties extended in the above two embodiments are used in combination, and the tr1 is treated as an optional parameter which is effective only when the tr is valued as ON, for further indicating the list of tones to be removed from the media stream. The default value of tr is OFF, and the default value of tr1 is wildcard "*" representing ALL. The combination may be any one of the following:
When tr is not set or is valued as OFF, it means that no tone is to be removed from the media stream, and usage of tr1 makes no sense;
When tr is valued as ON, and tr1 is valued as a list including at least one tone, it means that any detected tone that is included in the list shall be removed from the media stream;
When tr is valued as ON, and tr1 is valued as NULL, it means that no tone is to be removed from the media stream, or the removal makes no sense;
When tr is valued as ON, and tr1 is not set or is valued as wildcard "*" representing ALL, it means that all detected tones shall be removed from the media stream.

The detection herein may be defined as one of the following actions: the MG detects all tones detectable in its capability, and the MG detects all tones instructed by the MGC.

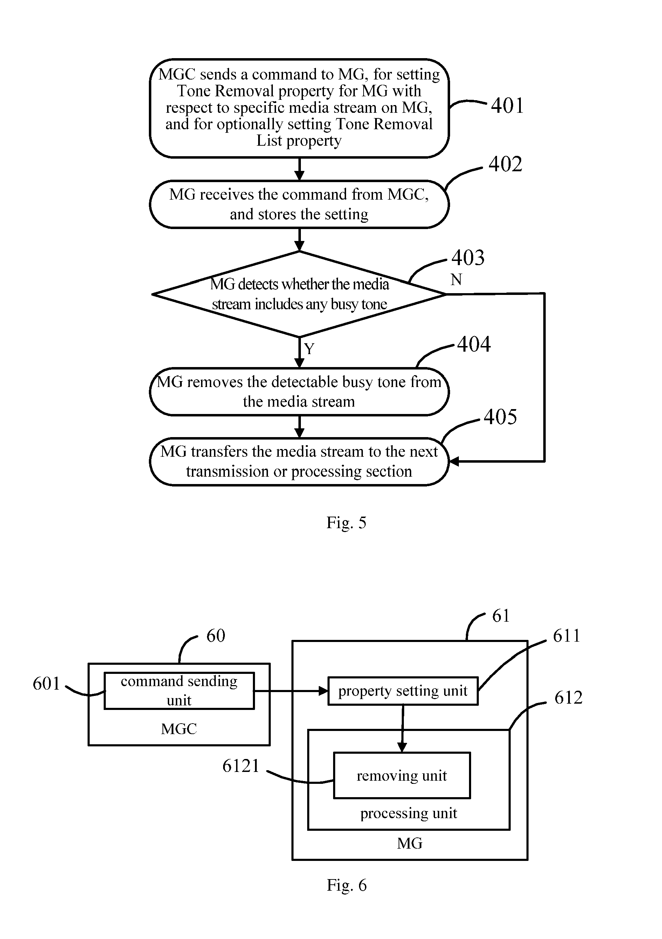

Referring to Fig. 5, illustrated is a flowchart of the present embodiment.

Step 401: The MGC sends a command to the MG, for setting a Tone Removal property for the MG with respect to a specific media stream on the MG, and optionally for setting a Tone Removal List property.

The MGC may send the command, such as Add, Move, Modify, etc., which carries the Tone Removal property and the optional Tone Removal List property in a LocalControl descriptor for the media stream to the MG. In the present embodiment, the Tone Removal property is valued as ON, the Tone Removal List property is valued as busy tone and fax calling tone, and it may be pre-defined that the MG shall remove all tones instructed by the MGC. In this case, it is assumed that the MGC instructs the MG to detect the ringing tone and the busy tone, i.e. the busy tone shall be detected and removed from the media stream.

After the setting is completed, the MGC may, if necessary, send a command to the MG for modifying the value of tr property and/or tr1 property.

Step 402: The MG receives the command from the MGC, and stores the setting.

Step 403: The MG detects whether the media stream includes any busy tone, and if yes, the process proceeds to step 404; otherwise, the process proceeds to step 405 directly.

Step 404: The MG removes the detectable busy tone from the media stream.

Step 405: The MG transfers the media stream to the next transmission or processing section.

### Embodiment 5

An embodiment of the invention provides a system for implementing the above-mentioned process on the tones in the media stream. Referring to Fig. 6, the system includes an MGC 60 and MG 61.

The MGC 60 includes a command sending unit 601 configured to send a command to the MG 61, to instruct the MG 61 to set a property parameter for controlling removal of tones from media stream, and the command may be Add, Move or Modify, etc.

The MG 61 is configured to set the property parameter according to the command sent from the MGC 61, and remove or reserve the tones in the media stream according to the property parameter, where the MG 61 includes a property setting unit 611 and a processing unit 612.

The property setting unit 611 is configured to set the property parameter for controlling removal of tones in the media stream according to the command of the MGC 60, where the property parameter includes Tone Removal property and/or Tone Removal list property.

The processing unit 612 is configured to process, if the received media stream carries tones, the tones in the media stream according to the property parameter for controlling removal of tones in media stream set by the property setting unit 611, and transfer the media stream to the next transmission (e.g. another Termination) or processing (e.g. code conversion) section.

The processing unit 612 may further include a removing unit 6121 for removing detected and specified tones from the media stream according to the value of the Tone Removal property and/or the Tone Removal List property. The characteristics of the detection are similar to what described above with respect to the methods of the invention, and therefore detailed description thereof is omitted.

In the embodiment of the invention, the MGC instructs the MG, if necessary, to remove or reserve the tones in the media stream by sending a command to the MG for setting the Tone Removal property and/or Tone Removal List property.

From the descriptions of the above embodiments, those skilled in the art can clearly understand that the invention can be implemented by hardware, or by a combination of software and necessary common hardware platform. Based on this understanding, the technical solution of the invention can be implemented as a software product, which may be stored in a non-volatile storage medium (e.g. CD-ROM, flash disk, portable hard disk, etc.), and include instructions that enable a computer equipment (e.g. PC, server, or network equipment) to execute the methods according to the embodiments of the invention.

What is described above are just some exemplary embodiments of the present invention, and do not mean any limitation to the scope of the invention. Any modification, equivalency and improvement within the spirit and principle of the invention are intended to be included in the scope of the invention.

## Claims

1. A method for processing a tone in a media stream, comprising:
receiving, by a media gateway (MG), a command issued by a media gateway controller (MGC), which carries a property parameter for controlling removal of the tone in the media stream; and
removing or reserving, by the MG, the tone in the media stream according to the property parameter.

2. The method according to claim 1, wherein
the property parameter comprises a Tone Removal property; and
removing or reserving, by the MG, the tone in the media stream according to the property parameter further comprises:
removing the tone detected in the media stream if a value of the Tone Removal property is ON; or
reserving the tone in the media stream, if the value of the Tone Removal property is OFF or the Tone Removal property is not set.

3. The method according to claim 2, wherein
the property parameter further comprises a Tone Removal List property; and
removing or reserving, by the MG, the tone in the media stream according to the property parameter further comprises:
removing or reserving the tone in the media stream according to the Tone Removal List property, if the value of the Tone Removal property is ON; or
reserving the tone in the media stream, if the Tone Removal property is default or the value of the Tone Removal property is OFF.

4. The method according to claim 3, wherein removing or reserving the tone in the media stream according to the Tone Removal List property further comprises:
removing, if a value of the Tone Removal List property is a list including at least one tone, the detected tone(s) that is(are) included in the list from the media stream; or
removing all the detected tones from the media stream, if the value of the Tone Removal List property is default or the value of the Tone Removal List property is a wildcard representing all tones; or
reserving the tones in the media stream, if the value of the Tone Removal List property is Null.

5. The method according to claim 1, wherein,
the property parameter comprises a Tone Removal List property; and
removing or reserving, by the MG, the tone in the media stream according to the property parameter further comprises:
removing, if a value of the Tone Removal List property is a list including at least one tone, the detected tone(s) that is (are) included in the list from the media stream; or
removing all the detected tones from the media stream, if the value of the Tone Removal List property is a wildcard representing all tones; or
reserving the tones in the media stream, if the Tone Removal List property is default or the value of the Tone Removal List property is Null.

6. The method according to claim 1, wherein the property parameter is carried in the command through a LocalControl descriptor for the media stream.

7. The method according to any one of claims 1 to 6, wherein the detected tones comprise:
all tones that can be detected by the MG in its capability; or
all tones detected by the MG according to the instruction of the MGC.

8. A media gateway (MG), comprising:
a property setting unit, configured to set a property parameter for controlling removal of a tone in a media stream according to a command from a media gateway controller (MGC); and
a processing unit, configured to process the tone in the media stream according to the property parameter set by the property setting unit.

9. The MG according to claim 8, wherein the processing unit further comprises:
a removing module, configured to remove the detected tones from the media stream according to the property parameter.

10. A system for processing a tone in a media stream, comprising a media gateway controller (MGC) and a media gateway (MG), wherein,
the MGC is configured to send a command to the MG to instruct the MG to set a property parameter for controlling removal of tones in media stream; and
the MG is configured to set the property parameter according to the command from the MGC, and remove or reserve the tones in the media stream according to the property parameter.
